# DEMANDE DE BREVET EUROPEEN

(11) **EP 1 464 216 A1**
(43) Date de publication de la demande: **06.10.2004**
(21) Numéro de dépôt: 04290842.6
(22) Date de dépôt: 31.03.2004
(51) Int. Cl.: A01F 15/07, A01F 15/14

(54) **Procédé d'enrubannage de balles d'ensillage**

(30) Priorité: 31.03.2003 FR 0303986
(71) Demandeur: CENTRE NATIONAL DU MACHINISME AGRICOLE, DU GENIE RURAL, DES EAUX ET DES FORETS (CEMAGREF), 92160 Antony (FR)
(72) Inventeur: Gaillard, François, 03150 Montoldre (FR)
(74) Mandataire: Fosse, Danièle

(57) **Abrégé**

L'invention concerne un procédé d'enrubannage de balles d'ensilage cylindriques comprenant une étape de liage d'une balle (B) cylindrique formée et une étape d'enrubannage de ladite balle (B).

L'invention consiste en ce qu'on poursuit le liage de la balle (B) au cours de l'étape d'enrubannage.

Application à l'enrubannage de balles d'ensilage.

## Description

La présente invention concerne un procédé d'enrubannage des balles d'ensilage. En vue de son stockage, un produit d'ensilage est habituellement conditionné dans une presse sous forme de balles cylindriques ou cubiques qui sont ensuite enrubannées de manière à éviter l'entrée d'air au coeur de la balle.

L'enrubannage consiste donc à appliquer un film de préférence étiré sur une balle de manière à obtenir une conservation de type anaérobie de la balle. On cherche ainsi à prévenir l'entrée d'air au coeur de la balle mais également à supprimer tout espace entre le film et le produit. De cette façon, même si le film présente des trous, on évite la propagation de l'air autour de la balle, ce qui limite les pertes.

Un procédé d'enrubannage connu est mis en oeuvre dans une installation comprenant une presse dans laquelle la balle est formée puis liée, et un poste d'enrubannage.

Le matériau servant au liage est coupé avant sortie de la presse et la balle liée est ensuite amenée au poste d'enrubannage axial où les extrémités planes et la face cylindrique de la balle sont recouvertes d'un film selon un enroulement axial par rapport à la balle.

Malgré une bonne tenue mécanique de la balle ainsi enrubannée, on a pu remarquer qu'en cas de mauvaise formation initiale ou de déformation de ces balles enrubannées, le film reste tendu entre les deux extrémités planes de la balle de sorte qu'un volume libre peut apparaître entre le produit d'ensilage et le film, ce qui engendre la possibilité d'une diffusion rapide de l'air et donc la formation d'une zone importante de mauvaise conservation en cas de trou dans l'enrubannage. Or les risques de trou sont nombreux car les balles, une fois enrubannées, sont éjectées sur le sol et risquent de se perforer. De même, la reprise ultérieure de ces balles et leur transport jusqu'au lieu de stockage peuvent entraîner des perforations.

Par conséquent, la présente invention a pour but de pallier cet inconvénient en proposant un procédé d'enrubannage d'une balle d'ensilage du type précédemment mentionné avec lequel la résistance mécanique, le maintien du contact matériau enrubannant produit d'ensilage et l'étanchéité sont améliorés même lorsque des déformations surviennent.

A cet effet, l'invention a pour objet un procédé d'enrubannage de balles d'ensilage comprenant une étape de liage d'une balle formée et une étape d'enrubannage de ladite balle, caractérisé en ce qu'on poursuit le liage de la balle au cours de l'étape d'enrubannage.

Ainsi de manière avantageuse, on obtient un renforcement de l'enrubannage ainsi réalisé, en intégrant le liage dans l'enrubannage. De cette manière, on renforce la zone la plus fragile qui est la face cylindrique de la balle car, sur celle-ci, vont se superposer le matériau d'enrubannage et le matériau de liage. Ainsi, le matériau de liage va également servir de protection interne et externe. Ce renfort s'effectue sans gaspillage de matériaux de liage pour les faces planes qui sont déjà couvertes par de nombreuses couches de film.

On peut avantageusement également poursuivre le liage après la fin de l'enrubannage, de manière à maintenir et enserrer le matériau d'enrubannage, une fois celui-ci coupé.

De préférence, le matériau servant au liage de la balle peut être un film étirable ou non, pré-étiré ou non, un non-tissé, un filet ou tout autre produit en bande approprié ou un lien type ficelle.

Ainsi de manière avantageuse, lorsque le matériau de liage est un film, on améliore encore plus sensiblement l'étanchéité de la balle.

Le matériau d'enrubannage est un matériau classiquement utilisé dans ce type de procédé, tel qu'un film étirable collant ou non collant, ou ce matériau peut également être du même type que celui utilisé pour le liage.

Le procédé selon l'invention peut donc permettre la réalisation d'un enrubannage à l'aide de deux matériaux identiques ou différents, par exemple un filet et un film. Ceci permet avantageusement de définir des conditions particulières d'enrubannage en faisant jouer les natures et/ou les caractéristiques des deux matériaux.

De préférence, le procédé d'enrubannage selon l'invention peut avantageusement être mis en oeuvre dans une enrubanneuse monoballe associant le pressage et l'enrubannage sur un même châssis d'origine ou non et articulé ou non.

On forme donc dans la presse une balle d'ensilage et on lie ladite balle une fois formée à l'aide, par exemple, d'un matériau en bande dont la face collante, si elle existe, est posée, de préférence, contre la balle dans ladite presse.

Une fois la balle liée, la balle sort de la presse et est amenée jusqu'au poste d'enrubannage, le matériau servant au liage suivant la balle. Au poste d'enrubannage, on réalise l'enrubannage à l'aide du matériau en bande d'enrubannage tandis que le matériau de liage continue à être apposé sur la face cylindrique de la balle. Pendant ce temps, la presse peut former une nouvelle balle. A la fin de l'enrubannage, le liage peut être prolongé pour assurer une protection supplémentaire.

L'invention a également pour objet une installation d'enrubannage pour la mise en oeuvre du procédé de l'invention, comportant un poste de liage d'une balle cylindrique pourvu de moyens de pose du matériau de liage et un poste d'enrubannage de ladite balle liée pourvu de moyens de pose du matériau d'enrubannage, caractérisée en ce que les moyens de pose du matériau de liage sont agencés pour autoriser le déroulement du matériau de liage depuis le poste de liage vers le poste d'enrubannage et les moyens d'enrubannage sont agencés pour enrubanner ladite balle cylindrique et autoriser l'enroulement du matériau de liage autour de la face cylindrique pendant cet enrubannage.

De préférence, l'installation est une enrubanneuse monoballe ou biballe à un ou plusieurs bras tournant et à table fixe par rapport à son axe vertical.

En variante, l'installation peut également être une enrubanneuse associant sur le même berceau, un poste de pressage et d'enrubannage.

L'installation peut également être une enrubanneuse monoballe ou biballe, à plateau tournant sur ses deux axes qui reçoit des balles déjà liées.

De préférence, les moyens de pose du matériau de liage sont logés dans la presse en périphérie de la chambre de la presse.

L'Installation peut également comporter un poste d'enrubannage de balles préliées pourvu de moyens de pose du matériau d'enrubannage et de moyens de pose du matériau de liage agencés pour que le liage se poursuive au cours de l'étape d'enrubannage.

On décrira maintenant l'invention plus en détail en référence au dessin dans lequel :
La figure 1 représente une vue en perspective d'une installation de mise en oeuvre du procédé d'enrubannage selon l'invention au stade : fin de pressage d'une balle ;
La figure 2 représente une installation selon la figure 1 au stade : sortie de la balle de la presse ;
La figure 3 représente une installation selon la figure 1 au stade enrubannage ;
La figure 4 représente une vue en coupe d'une balle enrubannée selon le procédé de l'invention ;
La figure 5 représente une vue en perspective de deux variantes d'installation de mise en oeuvre du procédé d'enrubannage selon l'invention au stade : fin de pressage d'une balle ;
La figure 6 représente une installation selon la figure 5 au stade : sortie de la balle de la presse ;
La figure 7 représente une installation selon la figure 5 au stade enrubannage ;
La figure 8 représente une installation selon la figure 5 au stade enrubannage ;
La figure 9 représente une presse enrubanneuse pour la mise en oeuvre du procédé de l'invention : stade début du liage ; et
La figure 10 représente la presse enrubanneuse de la figure 9, stade début de l'enrubannage.

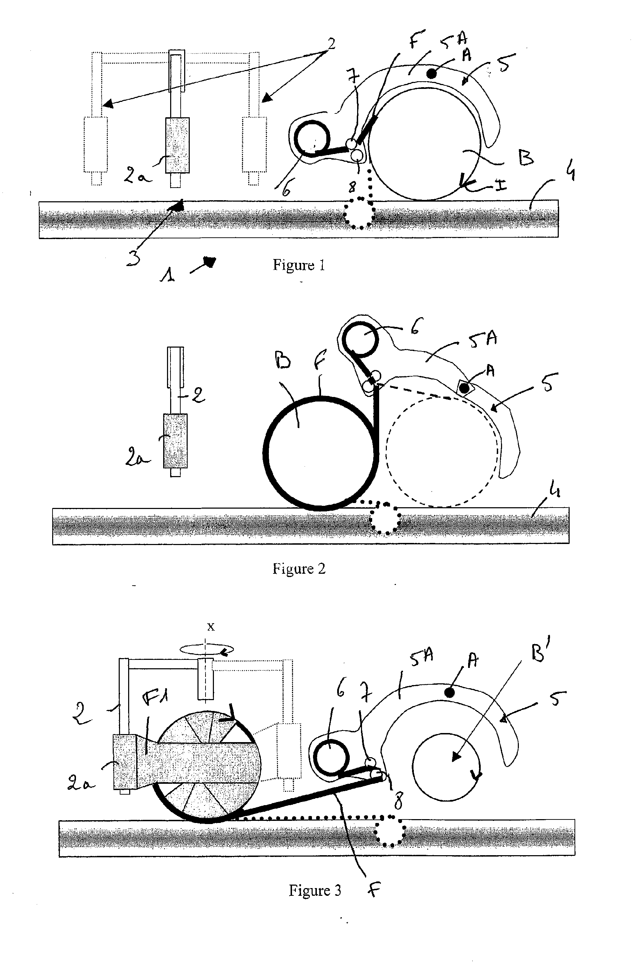

Comme on peut le voir à la figure 1, l'installation pour la mise en oeuvre du procédé selon l'invention est une enrubanneuse 1 monoballe à bras tournant 2 et à plateau fixe 3 associant le pressage et l'enrubannage sur un même châssis 4.

Ainsi sur le châssis 4 est disposée une presse 5 dans laquelle une balle B est formée. A l'intérieur de la presse 5 sont prévus des moyens de pose d'un matériau de liage tel qu'un film F, un non-tissé, un filet ou tout autre matériau en bande approprié ou un lien type ficelle.

Ces moyens de pose sont constitués d'une bobine de film 6 et de deux rouleaux 7 et 8. Ces moyens de pose sont de préférence positionnés dans la presse 5 en périphérie de la chambre de presse. Par conséquent, ils peuvent se trouver sensiblement à l'extrémité de la porte 5a de la presse 5. C'est-à-dire qu'ils sont positionnés dans la porte arrière 5a de la presse 5. De préférence, le rouleau 7 est positionné au-dessus du rouleau 8 et le film F passe entre les deux.

Les moyens de pose pourraient être également positionnés dans la partie inférieure de la presse 5, tel que représenté dans les figures en pointillés.

Comme on peut le voir à la figure 1, la balle B est formée dans la presse 5. Une fois la formation de la balle B achevée, le film F est déroulé entre les deux rouleaux 7 et 8 de manière à être posé sur la balle B. Ainsi, l'extrémité du film F est posée sur la balle B et celle-ci est entraînée en rotation dans le sens des aiguilles d'une montre, visualisé par la flèche I.

Dans la presse 5, le film F ne doit pas être posé trop tendu sur la balle B de manière à ne pas se réduire en largeur et en épaisseur, ce qui engendrerait une protection moindre. Un film F moins tendu est également moins sensible à la perforation.

A cet effet, le rouleau 7 est monté libre en rotation ou faiblement contraint, de cette manière le déroulage du film F depuis la bobine 6 se fait de manière tendue mais non étirée. On réalise au moins la pose d'une couche de film F en tant que liage.

Une fois le liage achevé, on éjecte la balle B liée hors de la presse 5 et on l'amène au poste d'enrubannage. Le film F continue à se dérouler et suit la balle B jusqu'au poste d'enrubannage (figure 2).

Celui-ci est constitué d'un plateau fixe 3 qui entraîne en rotation la balle B autour de son axe longitudinal. Le poste d'enrubannage comporte également un bras tournant 2. Ce bras 2 porte une bobine 2a de matériau d'enrubannage tel qu'un film F1.

Comme on peut le voir à la figure 3, le film F se trouve maintenant enroulé autour du rouleau 8. Celui-ci est entraîné en rotation à une vitesse supérieure à celle de la bobine 6 de film F. De cette manière, lors de la pose du film F sur la balle B au cours de l'enrubannage, le film F est étiré grâce à la mise en oeuvre de vitesses de rotations différentes, par exemple à l'aide de pignons de tailles différentes.

Le bras tournant 2 est entraîné en rotation autour d'un axe x au-dessus de la balle B et autour de la balle B de manière à couvrir, entre autres, les faces d'extrémité planes de la balle B. L'enrubannage s'effectue alors que le film F est toujours accroché et enroulé autour de la balle B.

Le positionnement des moyens de pose du film F sur la partie arrière ou en partie basse de la presse 5 permettent la rotation simultanée du bras tournant 2 autour de la balle B.

Pendant l'enrubannage, la presse 5 forme une nouvelle balle B'.

Une fois l'enrubannage achevé, on arrête le déroulage du film F1 qui, s'il est collant, est coupé et on continue la pose du film F. La découpe du film F est de préférence réalisée près des rouleaux 7, 7', 7" ou 8, 8', 8" et des moyens de distribution du film F sont prévus pour poser le film F sur une nouvelle balle B' à lier.

Si le matériau de liage est un matériau peu collant tel qu'un filet, le film F1 est arrêté mais n'est pas coupé. On continue alors à faire tourner la balle B autour de son axe longitudinal pour déposer de nouveau une ou deux couches de matériau de liage. Puis on coupe le matériau de liage et on enroule ce matériau autour de la balle B. On reprend ensuite la pose du film F1 d'enrubannage pour un ou deux tours de manière à bloquer le matériau de liage sur la balle B et à le couper sans risque.

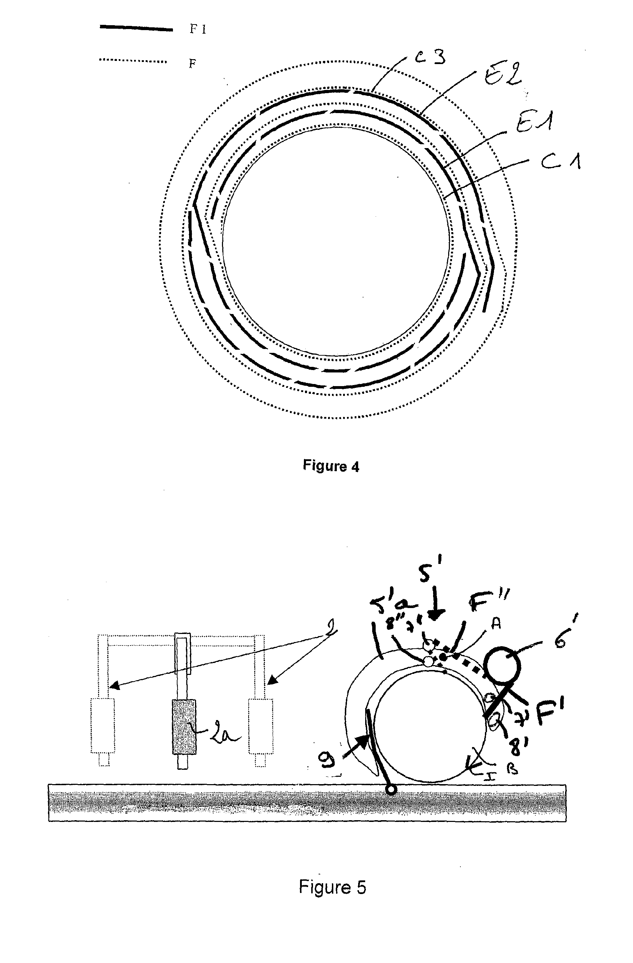

Comme on peut le voir à la figure 4, l'enrubannage selon l'invention permet d'obtenir une superposition de couches de matériau de liage (film F) et de matériau d'enrubannage (film F1). Sur cette figure 4, les couches C sont composées de 2 couches de film .On remarque que le film F posé en C1 entoure la balle puis passe entre E1 et E2 sur une demi périphérie de balle pour finalement recouvrir par C3 l'ensemble de l'enrubannage réalisé avec E1 passé à l'extérieur et E2. Sur cette figure, la protection extérieure comprend 2 couches.

Le film F n'est posé que sur la face cylindrique de la balle B tandis que le film F1 est posé successivement sur la face cylindrique et les faces planes de la balle B.

Le procédé selon l'invention permet d'obtenir une balle B enrubannée avec par exemple la pose d'une protection supplémentaire de quatre couches de matériau de liage qui correspondent à la consommation de seulement deux couches complètes d'enrubannage. Ceci engendre une économie des couches supplémentaires de 50%.

Aux figures 5 à 8 sont représentées deux autres variantes d'installation de mise en oeuvre du procédé selon l'invention.

Dans la première variante d'installation, le film F' est représenté par un trait continu et dans la seconde variante, le film F" est représenté par un trait en pointillés.

Ces installations diffèrent de celle représentée dans les figures 1 à 3 par le positionnement des moyens de pose du film F'ou F".

Ainsi, on peut voir, dans la première variante, que les moyens de pose du film F' sont positionnés sur l'avant de la presse 5' c'est-à-dire avant le point d'articulation A d'ouverture de la porte 5'a de la presse 5'. Ces moyens de pose sont constitués d'une bobine de film 6' et de deux rouleaux 7' et 8'.

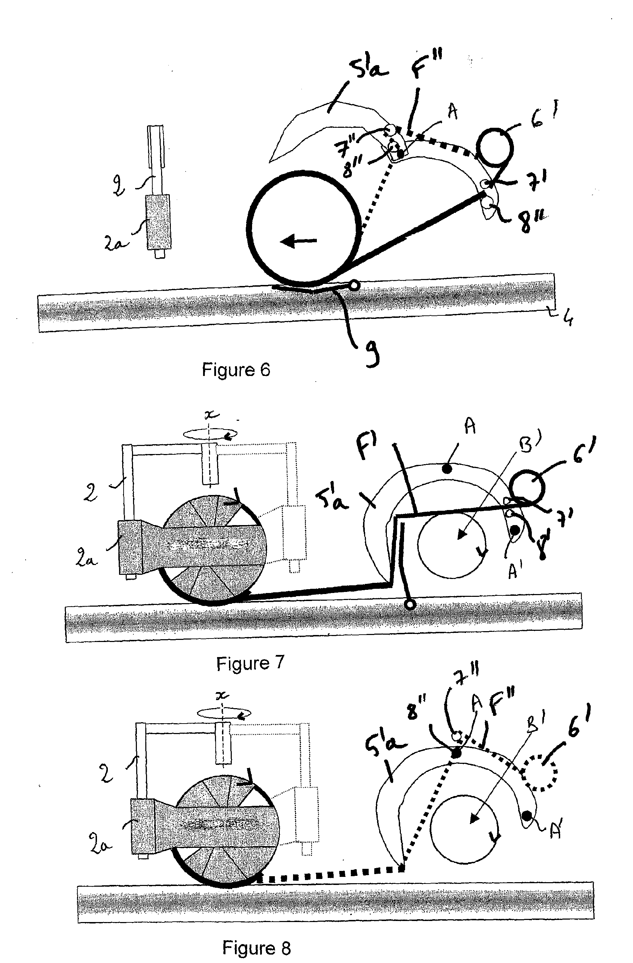

Dans l'autre variante représentée, les moyens de pose sont constitués d'une bobine identique à la bobine 6', de film F" et de deux rouleaux 7" et 8". La bobine 6' est donc positionnée comme dans la première variante tandis que les rouleaux 7" et 8" sont positionnés au niveau de l'articulation A de la porte 5'a sur ladite porte. Ainsi le film F" est enroulé autour de la balle B selon le sens de la flèche I représenté à la figure 5 pour lier ladite balle B puis la porte 5'a de la presse 5' est ouverte pour évacuer la balle B vers le poste d'enrubannage (figure 6). Le point d'articulation de la porte 5'a peut également être positionné tout à l'avant de la presse 5', au point A'.

En complément, la presse 5' comporte au niveau de sa sortie, des moyens de guidage 9 du film F'et F", à la fois pour guider le film lors du liage et pour le guider lorsque le film F'ou F" est déroulé hors de la presse 5' pour réaliser le liage pendant l'enrubannage. Ces moyens de guidage 9 peuvent être constitués de rouleaux ou de tapis animés ou non. Ces moyens de guidage 9 viennent en double porte de la porte arrière 5'a de la presse 5' mais sont fixés et articulés sur le châssis 4.

Ainsi figure 5, le film F'ou F" est déroulé dans le sens de la flèche I autour de la balle B, les moyens de guidage 9 sont en position de guidage pour le liage. Une fois, la balle B liée, la porte 5'a de la presse 5' est ouverte (figure 6), les moyens de guidage 9 sont abaissés pour laisser passer la balle B vers le poste d'enrubannage puis relevés, de sorte que le film F'ou F" se trouve guidé entre la porte 5'a refermée et les moyens de guidage 9, une nouvelle balle B' pouvant être pressée (voir la figure 7). Les moyens de guidage 9 peuvent constituer tout ou partie de la porte de la presse 5'.

La figure 8 représente la seconde variante avec le film F". Sur cette même figure, le passage du film est marqué en petits pointillés en cas de non montage du moyen de guidage 9.

Les rouleaux 7', 8' et 7" et 8" peuvent être entraînés à la même vitesse pour définir un taux d'étirage du film F' ou F" identique pendant le liage et l'enrubannage ou à des vitesses différentes définissant un taux d'étirage du film F' ou F" différents au liage et à l'enrubannage.

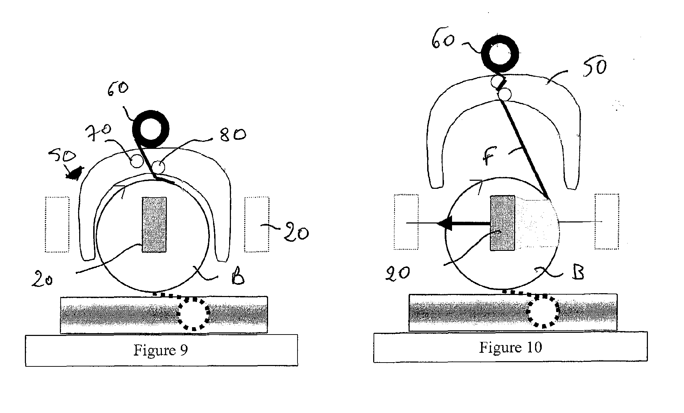

Dans la presse enrubanneuse représentée aux figures 9 et 10, la presse 50, le poste de liage et celui d'enrubannage sont confondus, c'est-à-dire que la presse enrubanneuse est une enrubanneuse monoballe à bras tournant et à table fixe par rapport à son axe vertical qui associe le pressage et l'enrubannage sur un même berceau. Ainsi, la balle B est formée dans la presse 50 et liée, les moyens de pose 60, 70 et 80 se trouvant à la périphérie de la chambre de presse, dans la partie supérieure ou inférieure de celle-ci. Lorsque la balle B est liée, la partie supérieure de la presse 50 se soulève pour permettre l'enrubannage. Un ou deux bras tournants 20 sont prévus pour réaliser l'enrubannage tandis que le liage se poursuit.

## Revendications

1. Procédé d'enrubannage de balles d'ensilage cylindriques comprenant une étape de liage d'une balle (B) cylindrique formée et une étape d'enrubannage de ladite balle (B),
**caractérisé en ce qu'**on poursuit le liage de la balle (B) au cours de l'étape d'enrubannage.

2. Procédé selon la revendication 1,
**caractérisé en ce qu'**on poursuit le liage de la balle (B) après l'étape d'enrubannage.

3. Procédé selon la revendication 1 ou 2,
**caractérisé en ce que** le matériau servant au liage de la balle (B) est un film (F, F', F") étirable ou non, un film pré-étiré ou non, collant ou non collant, un non-tissé, un filet ou tout autre produit en bande approprié ou un lien type ficelle.

4. Procédé selon l'une des revendications 1 à 3,
**caractérisé en ce que** le matériau d'enrubannage est un matériau approprié tel qu'un film (F1).

5. Procédé selon l'une des revendications 3 et 4,
**caractérisé en ce que** le liage et l'enrubannage sont réalisés à l'aide de deux matériaux identiques.

6. Procédé selon l'une des revendications 3 à 5,
**caractérisé en ce que** le liage et l'enrubannage sont réalisés à l'aide de matériaux différents.

7. Procédé selon l'une des revendications 3 à 6,
**caractérisé en ce que**, lorsque le matériau de liage est un film étirable (F, F', F"), ce film (F, F', F") est posé tendu ou non lors de la phase de liage et est posé étiré lors de la phase d'enrubannage.

8. Installation pour la mise en oeuvre du procédé selon les revendications 1 à 7, comportant un poste de liage d'une balle (B) cylindrique pourvu de moyens de pose du matériau de liage et un poste d'enrubannage de ladite balle (B) liée pourvu de moyens de pose du matériau d'enrubannage,
**caractérisée en ce que** les moyens de pose (6, 7, 8 ; 6', 7', 8' ; 7", 8") du matériau de liage sont agencés pour autoriser le déroulement du matériau de liage depuis le poste de liage vers le poste d'enrubannage et les moyens d'enrubannage (2) sont agencés pour enrubanner ladite balle cylindrique (B) et autoriser l'enroulement du matériau de liage autour de la face cylindrique de la balle (B) pendant cet enrubannage.

9. Installation selon la revendication 8,
**caractérisée en ce qu'**elle présente également une presse (5, 5', 50) pour former la balle (B).

10. Installation selon l'une des revendications 8 et 9,
**caractérisé en ce que** la presse (5, 5') est agencée pour réaliser la balle suivante (B') alors que le liage/enrubannage de la balle (B) précédente est en cours de réalisation.

11. Installation selon l'une des revendications 8 à 10
**caractérisée en ce que** les moyens de pose du matériau de liage sont constitués d'une bobine de matériau de liage (6, 6') et de deux rouleaux (7, 7',7") et (8, 8', 8"), , les vitesses de rotation de la bobine (6, 6'), du rouleau (7, 7', 7") et du rouleau (8, 8', 8") étant réglables indépendamment les unes des autres.

12. Installation selon l'une des revendications 8 à 11,
**caractérisée en ce que** les moyens de pose (6, 7, 8 ; 6', 7', 8' ; 7", 8") du matériau de liage sont logés dans la presse (5, 5', 50) en périphérie de la chambre de la presse (5, 5', 50).

13. Installation selon l'une des revendications 8 à 12,
**caractérisée en ce que** les moyens de pose du matériau d'enrubannage sont constitués par un bras tournant (2) entraîné en rotation autour d'un axe (x) au-dessus de la balle (B) et portant une bobine (2a).

14. Installation selon l'une des revendications 8 à 13,
**caractérisée en ce qu'**elle est constituée d'une enrubanneuse (1) monoballe ou biballe à bras tournant (2) et à table (3) fixe par rapport à son axe vertical (x) associant le pressage et l'enrubannage sur un même châssis (4) articulé ou non.

15. Installation selon l'une des revendications 8 14,
**caractérisée en ce qu'**elle est constituée d'une enrubanneuse monoballe à bras tournant et à table (3) fixe par rapport à son axe vertical (x) qui associe le pressage et l'enrubannage sur un même berceau.

16. Installation pour la mise en oeuvre du procédé selon les revendications 1 à 7,
**caractérisée en ce qu'**elle comporte un poste d'enrubannage de balles préliées pourvu de moyens de pose du matériau d'enrubannage et de moyens de pose du matériau de liage agencés pour que le liage se poursuive au cours de l'étape d'enrubannage.
